(19) Europäisches Patentamt
European Patent Office
Office européen des brevets

(11) **EP 2 263 869 B1**

(12) **EUROPEAN PATENT SPECIFICATION**

(45) Date of publication and mention
of the grant of the patent:
**01.06.2016 Bulletin 2016/22**

(51) Int Cl.:
**B32B 27/18** (2006.01)     **B32B 27/30** (2006.01)
**C08J 7/04** (2006.01)     **C08K 3/34** (2006.01)
**C08L 29/04** (2006.01)

(21) Application number: **09729051.4**

(22) Date of filing: **31.03.2009**

(86) International application number:
**PCT/JP2009/056685**

(87) International publication number:
**WO 2009/123200 (08.10.2009 Gazette 2009/41)**

(54) **GAS-BARRIER FILM AND PROCESS FOR PRODUCING THE SAME**

GASSPERRFOLIE UND HERSTELLUNGSVERFAHREN DAFÜR

FILM BARRIÈRE AUX GAZ ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 JP 2008093726**

(43) Date of publication of application:
**22.12.2010 Bulletin 2010/51**

(73) Proprietor: **Kuraray Co., Ltd.**
**Okayama 710-0801 (JP)**

(72) Inventors:
• **KAZETO, Osamu**
**Kurashiki-shi**
**Okayama 713-8550 (JP)**
• **NANBA, Michiyuki**
**Tainai-shi**
**Niigata 959-2653 (JP)**
• **OHTA, Shun-ichi**
**Toyohashi-shi**
**Aichi 441-8510 (JP)**
• **ITOH, Takafumi**
**Toyohashi-shi**
**Aichi 441-8510 (JP)**

(74) Representative: **Müller-Boré & Partner**
**Patentanwälte PartG mbB**
**Friedenheimer Brücke 21**
**80639 München (DE)**

(56) References cited:
**JP-A- 7 251 475     JP-A- 10 323 928**
**JP-A- 11 333 364     JP-A- 2003 268 183**

• **DATABASE WPI Week 199122 Thomson Scientific, London, GB; AN 1991-159208 XP002622110, & JP 3 093542 A (TOYOBO KK) 18 April 1991 (1991-04-18)**

**Description**

The present invention relates to a gas barrier film including a resin composition layer having a high gas barrier property and a method of producing the gas barrier film.

In recent years, demands for gas barrier materials have been more and more sophisticated in a variety of applications, and a variety of studies and developments have been previously carried out regarding function sophistication of barrier materials for various gasses, such as oxygen. One of them proposes techniques to improve the gas barrier property by providing a resin composition layer with a dispersed swellable inorganic layered silicate in a multilayer structure (refer to Patent Documents 1 through 2, for example).

These techniques can certainly improve the gas barrier property clearly compared to that of films not including a resin composition layer with a dispersed swellable inorganic layered silicate. However, general barrier performance required for high gas barrier films in Japan, and the GB standards, which are packaging material standards for milk, soy sauce, and the like in People's Republic of China, demand oxygen permeability of approximately 20 ml/m$^2$·day·atm. In this regard, a film in which a conventional resin composition layer containing swellable inorganic layered silicate dispersed therein is laminated with a biaxially-stretched polyester film of 12 $\mu$m may satisfy the demanded performance by sufficiently thickening a thickness of the resin composition layer. However in such a case, the excellent flexibility, mechanical properties, and the like of the biaxially-stretched polyester film are considered to be impaired. Accordingly, there is a demand for a high gas barrier film including a resin composition layer having a thickness of approximately 2 $\mu$m, which is a thickness of the resin composition layer not seriously affecting these properties of a biaxially-stretched polyester film, and having an excellent gas barrier property.

Such a resin composition layer with a dispersed swellable inorganic layered silicate has a surface on which irregularities are easily generated, and therefore it is prone to cause problems, such as defects in appearance, defects in printability, or defects in adhesion when laminated with another film or the like. To solve these problems, techniques are proposed that reduces the irregularities on a surface of the resin composition layer by refining processing conditions or methods of dispersing a swellable inorganic layered silicate into a resin (refer to Patent Document 3, for example). However, there are still many irregularities on a surface compared to resin compositions not containing a swellable inorganic layered silicate, and further improvement is required.

[Patent Document 1] JP7-251475A
[Patent Document 2] JP2003-268183A
[Patent Document 3] JP10-323928A

JP 3-93542A describes a coated plastic film. JP 11-333364A describes production of film laminate.

The present invention has been made to solve the above problems and an object thereof is to provide a multilayer barrier film including a resin composition layer, with a dispersed swellable inorganic layered silicate, having an extremely excellent gas barrier property and a method of producing a multilayer barrier film that has extremely less irregularities on a surface of the resin composition layer.

A gas barrier film of the present invention that solve the above problems comprises a layer of a resin composition (C) on at least one side of a substrate (D),
wherein the resin composition (C) contains a water soluble or water dispersible polymer (A) and a swellable inorganic layered silicate (B) satisfying expressions (1) and (2) below,

$$11.0 \geq D \geq 2.0 \ \mu m \quad (1)$$

$$\sigma \geq 1.8 \ \mu m \qquad (2)$$

wherein the resin composition (C) layer and/or the substrate (D) has at least one side having a deposited layer (E) of metal and/or metal oxide thereon. Here, D and $\sigma$ are a logarithmic average particle diameter of the swellable inorganic layered silicate (B) measured by laser diffraction and standard deviation of a particle size distribution thereof, respectively.

In the present invention, it is preferred that the swellable inorganic layered silicate is blended in a ratio of from 0.5 to 55 weight% in the resin composition (C).

In addition, in the present invention, it is preferred that the water soluble or water dispersible polymer (A) is a polyvinyl alcohol-based polymer.

Further, in the present invention, it is more preferred that the polyvinyl alcohol-based polymer is an ethylene-vinyl alcohol-based polymer.

In the present invention, it is preferred that the swellable inorganic layered silicate (B) is a synthetic inorganic layered silicate.

In addition, in the present invention, it is preferred that the swellable inorganic layered silicate (B) is a synthetic smectite.

Further, in the gas barrier film, it is preferred that a layer configuration of the gas barrier film is the resin composition (C) layer / the deposited layer (E) / the substrate (D).

In addition, in the gas barrier film, it is preferred that the substrate (D) is a film of at least one type of polymer selected from a group consisting of a polyamide-based polymer, a polyester-based polymer, and a polyvinyl alcohol-based polymer.

In addition, in the gas barrier film, it is preferred that the substrate (D) is a film of an ethylene-vinyl alcohol-based polymer.

In the gas barrier film, it is also a preferred embodiment of the present invention that a number of corrugation within a range of diameters of from 25 to 100 $\mu$m on a surface of the layer of the resin composition (C) is less than one per 1 mm$^2$.

As a method of producing the gas barrier film that has less irregularities on a surface of the resin composition (C) layer, a production method is preferred that comprises:

coating a solution or an aqueous dispersion containing the water soluble or water dispersible polymer (A) and the swellable inorganic layered silicate (B) on the substrate (D) using coating equipment;
smoothing it by a smoothing roll; and
drying it.

In addition, in the method of producing the gas barrier film, it is preferred that the smoothing roll has a diameter of 3 mm or more.

Further, in the method of producing the gas barrier film, it is preferred that the smoothing roll is a smoothing roll wound by a wire of size number 75 or less or a smooth surface roll not wound by a wire.

In addition, in the method of producing the gas barrier film, it is preferred that the smoothing roll unit has a film tension of from 1.0 to 15 Kg/cm.

In addition, it is preferred that the smoothing roll has a linear speed in a direction of rotation on a surface thereof and the film has a moving speed, both falling within a range of an expression (3) below.

$$0.5 \geq Vs/Vf \geq -1 \quad (3)$$

Wherein, Vs is the linear speed in a direction of rotation on a surface of the smoothing roll and Vf is the moving speed of the film. In a case that Vs is a negative value, it means that the smoothing roll rotates in a reverse direction to a direction of flow of the film.

A packaging material in which the gas barrier film is laminated with another material is also a preferred embodiment of the present invention.

According to the present invention, it becomes possible to provide a gas barrier film including a resin composition layer, with a dispersed swellable inorganic layered silicate, having an extremely excellent gas barrier property and a method of producing a multilayer barrier film that has extremely less irregularities on a surface of the barrier film.

To achieve a sufficient gas barrier property in the present invention, it is important that the swellable inorganic layered silicate (B) satisfies expressions (1) and (2) below.

$$11.0 \geq D \geq 2.0 \ \mu m \quad (1)$$

$$\sigma \geq 1.8 \ \mu m \quad (2)$$

Here, D and $\sigma$ are a logarithmic average particle diameter of the swellable inorganic layered silicate (B) measured by laser diffraction and standard deviation of a particle size distribution thereof, respectively. A more preferred range of D is from 2.4 $\mu$m to 10 $\mu$m, an even more preferred range is from 2.8 $\mu$m to 9 $\mu$m, and a most preferred range is from 3.2 $\mu$m to 8 $\mu$m. A more preferred range of $\sigma$ is 1.9 $\mu$m or more, an even more preferred range is 2.0 $\mu$m or more, and a most preferred range is 2.1 $\mu$m or more.

Although details are not apparent, a reason why the swellable inorganic layered silicate having a logarithmic average particle diameter of less than 2.0 μm does not exhibit a sufficient barrier property is assumed as follows. Crystals of the swellable inorganic layered silicate have a unit cell of approximately 1 nm across the thickness and they do not become any thinner. As a result, when the particle diameter becomes smaller, an aspect ratio of the particles (a ratio of the particle diameter to the thickness) becomes smaller. A larger aspect ratio of a particle theoretically enhances the gas barrier property ("World of Nanocomposite" written by Kiyoshi Chujo, published by Kogyo Chosakai Publishing, Inc., 2000, pgs. 46 - 50), so that fine particles of less than 2.0 μm does not develop a sufficient gas barrier property.

While a swellable inorganic layered silicate having a logarithmic average particle diameter of exceeding 11.0 μm has a large aspect ratio, exceedingly large particles break through the resin composition layer, if tilted, and the barrier property turns out to be rather degraded. In the current film formation techniques, it is difficult to perfectly orient the swellable inorganic layered silicate. The reason is because the resin composition layer in the present invention is formed by being applied on a substrate in a state of an aqueous suspension and then being dried, and therefore, the orientation of the swellable inorganic layered silicate is disturbed when the water molecules evaporate for drying. This is assumed to be a reason why the swellable inorganic layered silicate having a logarithmic average particle diameter of exceeding 11.0 μm does not exhibit a sufficient gas barrier property.

A reason why the standard deviation σ of a particle size distribution is to be 1.8 μm or more is based on experience that, among gas barrier films, each containing a swellable inorganic layered silicate having a same average particle diameter blended therein, those having larger standard deviation can yield a higher gas barrier property, and it is assumed because more varied powder can be filled denser and the orientation of the swellable inorganic layered silicate becomes not easily disturbed when dried, and also because large voids locally generated among the large swellable inorganic layered silicate particles are covered by the smaller swellable inorganic layered silicate particles. In a case of extremely large standard deviation of the particle size distribution, the particles are broken in a step of preparing a solution or an aqueous dispersion containing the water soluble or water dispersible polymer (A) and the swellable inorganic layered silicate (B), or in a step of coating them, so that it is not preferred for the gas barrier property. Accordingly, the standard deviation σ of the particle size distribution is preferably 11 μm or less, more preferably 8 μm or less, and even more preferably 5 μm or less.

A basic principle of the laser particle size analysis technique is described below. When laser light is applied to the dispersed particles, diffraction phenomena occur along the particle profile. By collecting the diffraction light with a lens, a ring of light (a diffraction ring) is yielded on a focal plane, and the particle size can be obtained from a diameter of the ring and intensity of the light. This principle is called as the Fraunhofer's optical diffraction principle, which is a basic principle of the laser particle size analysis technique. An analysis based on the diffraction phenomena can be applied up to a particle diameter of several-fold of the wavelength, whereas the lower limit is 1 μm. For a particle diameter of 1 μm or less, the Mie's light scattering theory is applied to obtain a particle size in a submicron range by detecting forward scattered light, backward scattered light, and side scattered light.

The logarithmic average particle diameter and the standard deviation of the particle size distribution in the present invention were measured by a laser diffractometer LMS-30 manufactured by Seishin Enterprise Co., Ltd. The logarithmic average particle diameter is a value of "X50" calculated by the laser diffractometer. In the device, a diffraction ring of laser light is sensed by a photodiode array. The forward scattered light, the backward scattered light, and the side scattered light are sensed by sensors, provided separately from the diffraction light receiving detector, three of them for detecting the forward scattered light, two for the backward scattered light, and one for the side scattered light.

In the present invention, although the mixing ratio of the swellable inorganic layered silicate (B) relative to the water soluble or water dispersible polymer (A) in the resin composition (C) is not particularly limited, it is preferred that the swellable inorganic layered silicate (B) is added from 0.5 to 55 weight% relative to the resin composition (C) in terms of solid content. A sufficient barrier property is not obtained in a case of added less than 0.5 weight%, while the flexibility of the resin composition (C) is reduced, in a case of exceeding 55 weight%, and faults, such as cracks, become prone to be created. The swellable inorganic layered silicate (B) is added more preferably from 1 to 40 weight%, even more preferably from 3 to 30 weight%, and most preferably from 5 to 20 weight%.

Although the water soluble or water dispersible polymer (A) used in the present invention means a polymer perfectly soluble or finely dispersible in a solvent containing water as a main component at normal temperature and is not necessarily to be limited, a polyvinyl alcohol-based polymer (hereinafter, may be abbreviated as a PVA) is preferred among them. Although a representative example of vinyl ester used for production of the PVA-based resin may include vinyl acetate, other fatty acid vinyl esters (vinyl propionate, vinyl pivalate, and the like) can also be used. As long as not inhibiting the objects of the present invention, a single or plurality of other comonomers, for example, α-olefins, such as ethylene, propylene, butylene, isobutene, 4-methyl-1-pentene, 1-hexene, and 1-octene; unsaturated carboxylic acids or esters thereof, such as (meth)acrylate, methyl (meth)acrylate, and ethyl (meth)acrylate; vinylsilane-based compounds, such as vinyltrimethoxysilane; unsaturated sulfonic acids or salts thereof; alkylthiols; and vinylpyrrolidones, such as N-vinylpyrrolidone, can also be copolymerized.

In addition, although a degree of saponification of the vinyl ester component in the PVA used for the present invention is not particularly limited, it is preferred to be 60 mol% or more. The degree of saponification of the vinyl ester component is more preferably 70 mol% or more, even more preferably 80 mol% or more, and most preferably 90 mol% or more. When the degree of saponification is less than 60 mol%, there is a possibility that the barrier property becomes insufficient.

Further, it is more preferred that the PVA is an ethylene-vinyl alcohol-based polymer (hereinafter, may be abbreviated as an EVOH) as the barrier property in high humidity conditions can be improved. Although the ethylene content in the EVOH-based resin is not particularly limited, it is preferred to be from 1 to 50 mol%. In a case of the ethylene content exceeding 50 mol%, there is a possibility that the barrier property of the obtained resin composition (C) becomes insufficient. The upper limit of the ethylene content is more preferably 20 mol% or less because, in a case of the ethylene content exceeding 20 mol%, using the solvent in which alcohol is added to water becomes essential to obtain the solution. It is even more preferably 17 mol% or less and most preferably 14 mol% or less. Whereas, in a case that the ethylene content is less than 1 mol%, there is a possibility that the high humidity barrier property of the resin composition (C) becomes insufficient. The lower limit of the ethylene content in the EVOH is more preferably 2 mol% or more, even more preferably 3 mol% or more, and most preferably 4 mol% or more. In a case that the EVOH contains two or more types of EVOHs having different ethylene contents, an average value calculated from the blend weight ratio is defined as the ethylene content.

The degree of saponification of the PVA-based resin and the ethylene content of the EVOH can be obtained by a nuclear magnetic resonance (NMR) technique.

Although not necessarily to be limited in the present invention, it is preferred that the swellable inorganic layered silicate (B) is a synthetic inorganic layered silicate, and further, is more preferred that it is a synthetic smectite.

Although the synthetic smectite is not particularly limited, it may include Na-hectorite, Li-hectorite, and the like. They can be obtained by a conventionally known inner heat melting process. For example, $SiO_2$ MgO, $Al_2O_3$, $Na_2CO_3$, $Li_2CO_3$ and/or fluoride (NaF, LiF, $MgF_2$, $Na_2SiF_6$, $Li_2SiF_6$, and the like) may be mixed and blended according to the intended chemical composition and melted. It is allowed to use natural mineral, such as feldspar, olivine, and talc, as a source of Si, Al, or Mg. The synthetic smectite thus obtained is adjusted in the average particle diameter and the standard deviation by a method, such as pulverization by a ball mill or the like or centrifugal classification.

As described later, in a method of mixing the water soluble or water dispersible polymer (A) and the swellable inorganic layered silicate (B), an aqueous dispersion of (B) may be used, and it is allowed to add an appropriate dispersant to the aqueous dispersion as long as not inhibiting the effects of the present invention. In addition, as long as not inhibiting the effects of the present invention, it is possible to use additives, such as surfactants, thickeners, water soluble polymers, and preservatives, as needed.

As long as not inhibiting the objects of the present invention, an appropriate amount of plasticizers, antioxidants, pigments, ultraviolet absorbers, antistatic agents, crosslinkers, fillers, reinforcing agents for various fibers or the like, and so on can also be added to the resin composition (C).

Although the resin composition (C) of the present invention can be used singly, it is preferred to be used by being laminated with a substrate (D) for use as a barrier packaging material because the resin composition (C) exhibits a sufficient barrier property even as a thin layer of 5 $\mu$m or less and because a sufficient mechanical strength cannot be obtained with such a thin layer of 5 $\mu$m or less.

Although the substrate (D) may be paper, metal, fabric, plastic, and the like and not particularly limited, plastic is preferred as a packaging material, and among all, polyamide-based polymers, polyester-based polymers, and polyvinyl alcohol-based polymers themselves have good gas barrier properties and thus it is possible to obtain a film having a high gas barrier property by combining these polymers with the resin composition (C), so that it is preferred to be a film of at least one type of polymer selected from a group consisting of these polymers. Further, among these polymers, an ethylene-vinyl alcohol-based polymer, which is a polyvinyl alcohol-based polymer, has a highest barrier property and is most preferred.

Although a thickness of the resin composition (C) when laminated with the substrate (D) is not particularly limited, it is preferably from 0.01 to 50 $\mu$m. There is a possibility of not being able to obtain a sufficient gas barrier property in a case of less than 0.01 $\mu$m, while the uniformity within the resin composition (C) layer is deteriorated in a case of exceeding 50 $\mu$m. From such a perspective, the lower limit of the thickness of the resin composition (C) is more preferably 0.05 $\mu$m or more, even more preferably 0.1 $\mu$m or more, and most preferably 0.3 $\mu$m or more, and the upper limit of the thickness is more preferably 30 $\mu$m or less, even more preferably 20 $\mu$m or less, and most preferably 10 $\mu$m or less.

Examples of a method of laminating the resin composition (C) and the substrate (D) may include coextrusion molding, extrusion coating, and coating of a solution or an aqueous dispersion, and coating of a solution or an aqueous dispersion containing the water soluble or water dispersible polymer (A) and the swellable inorganic layered silicate (B) is preferred for the operability and the performance of the laminated film. Examples of the coating equipment may include gravure coating, reverse coating, spray coating, kiss coating, comma coating, die coating, knife coating, air knife coating, and metalling bar coating.

Examples of a method of preparing a coating liquid for the coating of a solution or an aqueous dispersion, in a case that the water soluble or water dispersible polymer (A) is a water dispersible polymer, may include a method of adding the swellable inorganic layered silicate (B) to an aqueous dispersion of (A) and stirring it to disperse (B), a method of preparing an aqueous dispersion of the swellable inorganic layered silicate (B) in advance and mixing it with an aqueous dispersion of (A), and the like. Among them, the method of preparing an aqueous dispersion of the swellable inorganic layered silicate (B) in advance and mixing it with an aqueous dispersion of (A) is more preferred for easier control over the dispersed state of the swellable inorganic layered silicate (B). In a case that the water soluble or water dispersible polymer (A) is a water soluble polymer, examples may include a method of loading (A) and (B) in a solvent at the same time and then heating and stirring to carry out dissolution of (A) and dispersion of (B) at the same time, a method of preparing a solution of (A) and then adding (B) and stirring it to disperse (B), a method of preparing an aqueous dispersion of (B) and then adding (A) and heating and stirring to dissolve (A), a method of separately preparing a solution of (A) and an aqueous dispersion of (B), respectively, and then mixing them, and the like. Among them, the method of separately preparing a solution of (A) and an aqueous dispersion of (B), respectively, and then mixing them is more preferred for easier control over the dispersed state of the swellable inorganic layered silicate (B).

As described above, it is also possible to add an appropriate amount of plasticizers, antioxidants, pigments, ultraviolet absorbers, antistatic agents, crosslinkers, fillers, reinforcing agents for various fibers or the like, and so on to the coating liquid as long as not inhibiting the objects of the present invention. In addition, as long as not inhibiting the objects of the present invention, additives, such as alcohols, may also be added to improve the stability of the coating liquid, the leveling property for application, and the like.

In a case that the adhesion is insufficient between the resin composition (C) and the substrate (D), it is allowed to provide an adhesive layer, such as an anchor coating agent, between them.

In the present invention, the resin composition (C) layer and/or the substrate (D) has at least one side having a deposited layer (E) of metal and/or metal oxide thereon. The deposited layer (E) of metal and/or metal oxide has a good barrier property not dependent on humidity conditions but has a fault of easily causing defects, such as cracks, due to deformation or the like and reducing the barrier property. Whereas the resin composition (C) falls short of the barrier property of the deposited layer (E) but has higher resistance to deformation and the like. Accordingly, their respective disadvantages can be compensated by combining both.

Although the metal is particularly not limited for the deposited layer (E) of metal and/or metal oxide in the present invention, that stable in the air is preferred and aluminum or the like is preferably used that has a film surface oxidation stabilized after thin film formation. The metal oxide is preferably aluminum oxide, silicon oxide, titanium oxide, zinc oxide, and the like, and an oxidation state thereof may be varied. The deposited layer (E) preferably has a thickness of from 1 to 2000 nm. It is more preferably from 10 to 1500 nm, and even more preferably from 50 to 1000 nm. There is a possibility of not being able to obtain a sufficient barrier property when the thickness of the deposited layer (E) is exceedingly thin, while it is prone to cause failures, such as cracks, against deformation or the like when it is exceedingly thick. The method of forming the deposited layer (E) is not particularly limited, and in addition to a general vacuum deposition technique, a CVD technique, a sputtering technique, or the like is used.

It is allowed to provide the resin composition (C) layer and the deposited layer (E) respectively on one side or both sides of the substrate (D), and in a case of providing each one layer of the resin composition (C) layer and the deposited layer (E), the layer configuration is considered in three patterns of (C) / (D) / (E) , (C) / (E) / (D) , and (E) / (C) / (D) . Among them, the configuration of (C)/(E)/(D) is preferred in which the deposited layer (E) is provided on the substrate (D) and the resin composition (C) layer is coated thereon because the resin composition (C) layer can be functioned as a protective layer for the deposited layer (E).

Although not necessarily limited in the present invention, it is preferred that a number of corrugation within a range of diameters of from 25 to 100 $\mu$m on a surface of the layer of the resin composition (C) is less than one per 1 mm$^2$. The number of corrugation corresponds to the number of irregularities on the surface, and if there are many irregularities on the surface, it is prone to cause problems, such as (1) the surface of the resin composition (C) layer turns out to have a rough texture, which causes defects in appearance, (2) it is prone to cause a problem of ink bleed in the irregularities and the like in a case of printing on the surface of the resin composition (C) layer, and (3) the surface of the resin composition (C) layer and an adhesive layer are poorly attached, when laminating the resin composition (C) layer and another substrate, and sufficient adhesion may not be obtained.

The number of corrugation in the present invention is defined as follows. A low power (approximately five times power) film surface image obtained by an optical microscope or the like is image processed using an image analyzer or the like. At this time, the image is processed so as to expose the portions of peaks and troughs, existing on the film surface, as figures. Each one of the figures observed in the image is substituted with an equivalent round and a number of those having diameters within a range of from 25 to 100 $\mu$m is counted to define an equivalent value per 1 mm$^2$ as the number of corrugation.

As the method of making the number of corrugation within a range of diameters of from 25 to 100 $\mu$m on a surface of the resin composition (C) layer to be less than one per 1 mm$^2$, a production method is preferred that includes: coating a solution or an aqueous dispersion containing the water soluble or water dispersible polymer (A) and the swellable inorganic layered silicate (B) on the substrate (D) using coating equipment; smoothing it by a smoothing roll; and drying it.

Although the coating equipment is not particularly limited and the various types of coating equipment described above can be used, preferred examples of the coating equipment may include gravure coating and reverse coating for balancing productivity, uniformity of the coating layers, equipment costs, and the like.

The coating liquid thus coated on the substrate (D) generally has many irregularities existing on the surface. Although the irregularities are gradually alleviated due to the leveling effect of the coating liquid, it usually enters into drying equipment before the irregularities are disappeared sufficiently, so that the number of corrugation cannot be made less than one per 1 mm$^2$. With that, by flattening out the irregularities on the surface of the coating liquid layer on the substrate (D) with a smoothing roll and then putting it into drying equipment, it becomes possible to make the number of corrugation less than one per 1 mm$^2$.

Although not necessarily limited in the method of producing a coating film, it is preferred that the smoothing roll has a diameter of 3 mm or more. In a case of less than 3 mm, there is a possibility that it becomes difficult to uniformly press against the film due to the lack of stiffness of the smoothing roll and that the surface area of the smoothing roll is too small to sufficiently maintain the scraped coating liquid and thus the liquid may drip from the smoothing roll. From this perspective, the diameter of the smoothing roll is more preferably 5 mm or more, even more preferably 10 mm or more, and most preferably 15 mm or more. Although depending on the rotational speed of the smoothing roll, an exceedingly large diameter may cause drying and deposition of the coating liquid on the smoothing roll and thus it is better to avoid those having a diameter exceeding 1 m.

Such a smoothing roll may be wound by a wire on the surface, and although not necessarily to be limited in the method of producing a coating film, it is preferred that the wire is of size number 75 or less or the smoothing roll is a smooth surface roll not wound by a wire. Here, a wire of size number 75 means that the winding wire has a diameter of 75/1000 inches (approximately 1.9 mm). In a case of the size number of the wire exceeding 75, there is a possibility of not being able to obtain sufficient smoothness on the coating liquid surface. From this perspective, it is more preferred that the size number of the wire is size number 50 or less, even more preferred that it is size number 25 or less, and most preferred that the smoothing roll is a smooth surface roll not wound by a wire.

Although not necessarily limited in the method of producing a coating film, it is preferred that the smoothing roll unit has a film tension of from 1.0 to 15 Kg/cm. In a case of an exceedingly high film tension, the film is pressed against the smoothing roll too firmly and the coating liquid is prone to drip. In a case of an exceedingly low tension, the film does not touch the smoothing roll uniformly and sufficient smoothness cannot be obtained. From this perspective, the film tension of the smoothing roll unit is more preferably from 2.0 to 10 Kg/cm and even more preferably from 3.0 to 8.0 Kg/cm.

A general smoothing roll rotates in a reverse or same direction as the direction of flow of the substrate in order to uniformly apply the scraped coating liquid again on the substrate. Although not necessarily to be limited in the method of producing a coating film of the present invention, it is preferred that the smoothing roll has a linear speed on a surface thereof and the film has a moving speed, both falling within a range of an expression (3) below.

$$0.5 \geq Vs/Vf \geq -1 \quad (3)$$

Here, Vs is the linear speed on a surface of the smoothing roll and Vf is the moving speed of the film. In an either case of Vs/Vf exceeding 0.5 or below -1, it is prone to cause problems of dripping and spattering of the coating liquid. From this perspective, the upper limit of Vs/Vf is more preferably 0.1 and even more preferably 0.05, and the lower limit is more preferably -0.5 and even more preferably -0.3.

The method of drying the coating liquid layer is not particularly limited, for example a hot roll contact technique, a heat medium (air, oil, and the like) contact technique, an infrared heating technique, a microwave heating technique, and the like can be utilized. Although representative drying conditions for the coated film are a drying temperature of from 60 to 250°C and a drying time range of from 1 to 60 seconds, they depend on the thermal efficiency of the drying equipment and the like, so that it is necessary to select conditions matching the device.

A packaging material including at least one or more layers of the gas barrier film that is obtained by the method above and in which the resin composition (C) is laminated on the substrate (D), the packaging material being laminated with another material, is also one of preferred embodiments of the present invention. Although the configuration of this packaging material can be selected freely as needed, a representative example may include providing a sealant layer for thermal adhesion in the outermost layer and also combining with a polypropylene film, a polyester film, or the like according to the intended use. Specifically, examples may include present gas barrier film / biaxially-stretched nylon film / unstretched polypropylene film, biaxially-stretched polyester film / present gas barrier film / linear low density polyethylene film, unstretched nylon film / present gas barrier film / ethylene vinyl acetate copolymer film, and the like.

Although the lamination method can employ a known method and dry lamination is general, it is possible to use other methods, such as extrusion coating, solution coating, and emulsion coating.

The gas barrier film of the present invention thus obtained has a gas barrier property more excellent than a gas barrier film by a conventional technique.

Examples

Although a description is given below to Examples of the present invention, the present invention is not limited by the Examples. In the following description, "%" and "parts" are on a weight basis unless otherwise specified.

[Example 1]

Thirty-three point seven five grams of EXCEVAL 3110 (6 mol% of ethylene content, degree of saponification of 98 mol% or more) produced by Kuraray Co., Ltd., which is a polyethylene-vinyl alcohol polymer obtained by saponifying a polyethylene-vinyl acetate polymer, was added to 326.5 g of ion exchange water and was heated at 90°C while stirring for one hour to obtain an aqueous solution. The aqueous solution was cooled down to room temperature, and then 64.75 g of a 50% aqueous isopropyl alcohol solution was added to improve the stability of the solution. Further, 75 g of an NHT-sol B2 (aqueous dispersion of synthetic hectorite, solid content concentration of 5%, average particle diameter of 3.8 $\mu$m, standard deviation of 2.2 $\mu$m) produced by Topy Industries Ltd. was added to this solution to obtain 500 g of a liquid containing an EVOH and a swellable inorganic layered silicate. The solid content concentration in the liquid was 7.5% and the ratio of the swellable inorganic layered silicate in the solid content blended therein was 10%.

This liquid was hand coated uniformly on EVAL EF-XL #15 (thickness of 15 $\mu$m), which is a biaxially-stretched EVOH film produced by Kuraray Co. , Ltd. , using a bar coater of size number 28 and dried with a hot air drier at 100°C for three minutes. The thickness of the coating layer (composition of the EVOH and the swellable inorganic layered silicate) after drying was 1.5 $\mu$m.

Using the coated film obtained as above, oxygen permeability was evaluated. A part of the sample film was cut out and left in a desiccator which was conditioned at 20°C-85% RH for one week for humidity conditioning, and then the amount of oxygen permeation at 20°C-85% RH was measured by an oxygen permeation measuring device (OX-TRAN-2/20 manufactured by Modern Controls Inc.) to calculate the oxygen permeability. As a result, the oxygen permeability was 0.9 ml/m$^2$·day·atm.

Metal aluminum was deposited on a coating layer surface of the coated film thus obtained and a reflected light figure (magnification: five times power) of the film surface was obtained by an optical microscope (BX60 manufactured by Olympus Optical Co., Ltd.). The figure was captured by an image analyzer and image processed for automatic binarization (P tile method, 10%), and each one of the figures observed in the processed image was substituted with an equivalent round to measure a number of those having diameters within a range of from 25 to 100 $\mu$m. Such measurement was carried out 20 times by changing the spots and the average value was calculated to define an equivalent numerical value per 1 mm$^2$ as the number of corrugation. As a result, the number of corrugation in the present coated film was 0.6/mm$^2$.

[Comparative Example 1]

Oxygen permeability of EVAL EF-XL #15 produced by Kuraray Co. , Ltd. without coated by the composition of the EVOH and the swellable inorganic layered silicate was measured in a similar manner to Example 1. The result was 1.8 ml/m$^2$·day·atm.

[Example 2]

Nine point six grams of TAKELAC A-385 and 0.8 g of TAKENATE A-50, which are adhesives produced by Mitsui Takeda Chemicals Inc. , were mixed and diluted with 70 g of ethyl acetate to prepare an adhesive liquid. The adhesive liquid was hand coated uniformly on a film of 12 $\mu$m of Lumirror P60, which is a biaxially-stretched polyester film produced by Toray Industries, Inc. , using a bar coater of size number 8 and dried with a hot air drier at 60°C for three minutes . The thickness of the adhesive layer after drying was 0.3 $\mu$m. On this adhesive layer, 500 g of a liquid containing the EVOH and the swellable inorganic layered silicate used in Example 1 was coated in a similar manner to Example 1 to measure oxygen permeability. The result was 2.1 ml/m$^2$·day·atm. The number of corrugation was measured in a similar manner to Example 1 and the result was 0.5/mm2.

[Comparative Example 2]

Oxygen permeability of a film of 12 $\mu$m of Lumirror P60, which is a biaxially-stretched polyester film produced by Toray Industries, Inc., without coated by the composition of the EVOH and the swellable inorganic layered silicate was measured in a similar manner to Example 1. The result was 92 ml/m$^2$·day·atm.

[Example 3]

In a similar manner to Example 2 other than using PVA-110H (degree of saponification of 98 mol% or more), which is a polyvinyl alcohol resin produced by Kuraray Co., Ltd., as the water soluble or water dispersible polymer (A), a film coated by a composition of the PVA and the swellable inorganic layered silicate was prepared. Oxygen permeability of this film was measured in a similar manner to Example 1 and the result was 4.1 ml/m$^2$·day·atm. The number of corrugation was measured in a similar manner to Example 1 and the result was 0.6/mm$^2$.

[Example 4]

In a similar manner to Example 3 other than using NHT-sol B5 (aqueous dispersion of synthetic hectorite, solid content concentration of 5%, average particle diameter of 5.2 $\mu$m standard deviation of 2.3 $\mu$m) produced by Topy Industries Ltd. as the swellable inorganic layered silicate (B), a film coated by a composition of the PVA and the swellable inorganic layered silicate (B) was prepared. Oxygen permeability of this film was measured in a similar manner to Example 1 and the result was 3.1 ml/m$^2$·day·atm. The number of corrugation was measured in a similar manner to Example 1 and the result was 0.7/mm$^2$.

[Example 5]

In a similar manner to Example 3 other than using NHT-sol B7 (aqueous dispersion of synthetic hectorite, solid content concentration of 5%, average particle diameter of 7.1 $\mu$m, standard deviation of 2.4 $\mu$m) produced by Topy Industries Ltd. as the swellable inorganic layered silicate (B), a film coated by a composition of the PVA and the swellable inorganic layered silicate was prepared. Oxygen permeability of this film was measured in a similar manner to Example 1 and the result was 4.2 ml/m$^2$·day·atm. The number of corrugation was measured in a similar manner to Example 1 and the result was 0.8/mm2.

[Example 6]

In a similar manner to Example 3 other than using NTS-sol C (aqueous dispersion of synthetic sodium tetrasilicic mica, solid content concentration of 5%, average particle diameter of 2.8 $\mu$m, standard deviation of 2.1 $\mu$m) produced by Topy Industries Ltd. as the swellable inorganic layered silicate (B), a film coated by a composition of the PVA and the swellable inorganic layered silicate was prepared. Oxygen permeability of this film was measured in a similar manner to Example 1 and the result was 9.7 ml/m$^2$·day·atm. The number of corrugation was measured in a similar manner to Example 1 and the result was 0.5/mm$^2$.

[Comparative Example 3]

In a similar manner to Example 3 other than not adding the aqueous dispersion of the swellable inorganic layered silicate (B), a film coated by the PVA was prepared. Oxygen permeability of this film was measured in a similar manner to Example 1 and the result was 53 ml/m$^2$·day·atm.

[Example 7]

In a similar manner to Example 3 other than using NHT-sol B10 (aqueous dispersion of synthetic hectorite, solid content concentration of 5%, average particle diameter of 10.4 $\mu$m, standard deviation of 2.4 $\mu$m) produced by Topy Industries Ltd. as the swellable inorganic layered silicate (B), a film coated by the PVA was prepared. Oxygen permeability of this film was measured in a similar manner to Example 1 and the result was 15 ml/m$^2$·day·atm. The number of corrugation was measured in a similar manner to Example 1 and the result was 0.9/mm$^2$.

[Comparative Example 4]

In a similar manner to Example 3 other than using NTS-5 (aqueous dispersion of synthetic sodium tetrasilicic mica, solid content concentration of 6%, average particle diameter of 11.5 $\mu$m, standard deviation of 2.4 $\mu$m) produced by Topy Industries Ltd. as the swellable inorganic layered silicate (B), a film coated by the PVA was prepared. Oxygen permeability of this film was measured in a similar manner to Example 1 and the result was 21 ml/m$^2$·day·atm.

[Comparative Example 5]

In a similar manner to Example 3 other than using NTS-10 (aqueous dispersion of synthetic sodium tetrasilicic mica, solid content concentration of 10%, average particle diameter of 14.0 $\mu$m, standard deviation of 2.5 $\mu$m) produced by Topy Industries Ltd. as the swellable inorganic layered silicate (B), a film coated by the PVA was prepared. Oxygen permeability of this film was measured in a similar manner to Example 1 and the result was 29 ml/m$^2$·day·atm.

[Comparative Example 6]

In a similar manner to Example 3 other than using NHT-sol 1 (aqueous dispersion of synthetic hectorite, solid content concentration of 5%, average particle diameter of 1.1 $\mu$m, standard deviation of 2.1 $\mu$m) produced by Topy Industries Ltd. as the swellable inorganic layered silicate (B), a film coated by the PVA was prepared. Oxygen permeability of this film was measured in a similar manner to Example 1 and the result was 33 ml/m$^2$·day·atm.

[Comparative Example 7]

In a similar manner to Example 3 other than using NHT-sol 2 (aqueous dispersion of synthetic hectorite, solid content concentration of 5%, average particle diameter of 2.2 $\mu$m, standard deviation of 1.6 $\mu$m) produced by Topy Industries Ltd. as the swellable inorganic layered silicate (B), a film coated by the PVA was prepared. Oxygen permeability of this film was measured in a similar manner to Example 1 and the result was 30 ml/m$^2$·day·atm.

[Comparative Example 8]

In a similar manner to Example 3 other than using NHT-sol B1 (aqueous dispersion of synthetic hectorite, solid content concentration of 5%, average particle diameter of 1.1 $\mu$m, standard deviation of 1. 6 $\mu$m) produced by Topy Industries Ltd. as the swellable inorganic layered silicate (B), a film coated by the PVA was prepared. Oxygen permeability of this film was measured in a similar manner to Example 1 and the result was 38 ml/m$^2$·day·atm.

[Comparative Example 9]

In a similar manner to Example 3 other than using an aqueous dispersion obtained by adding Kunipia F (natural montmorillonite, average particle diameter of 1.9 $\mu$m, standard deviation of 1. 6 $\mu$m) produced by Kunimine Industries Co., Ltd. to deionized water so as to make the solid content to be 5% and stirring it for 30 minutes in a mixer for domestic use as the swellable inorganic layered silicate (B), a film coated by a composition of the PVA and the swellable inorganic layered silicate was prepared. Oxygen permeability of this film was measured in a similar manner to Example 1 and the result was 33 ml/m$^2$·day·atm.

[Comparative Example 10]

In a similar manner to Example 3 other than using an aqueous dispersion obtained by adding Somasif ME-100 (swellable fluorine mica-based mineral, average particle diameter of 5.9 $\mu$m, standard deviation of 1.6 $\mu$m) produced by Co-op Chemical Co., Ltd. to deionized water so as to make the solid content to be 5% and stirring it for 30 minutes in a mixer for domestic use as the swellable inorganic layered silicate (B), a film coated by a composition of the PVA and the swellable inorganic layered silicate was prepared. Oxygen permeability of this film was measured in a similar manner to Example 1 and the result was 28 ml/m$^2$·day·atm.

[Comparative Example 11]

In a similar manner to Example 1 other than modifying the amount of EXCEVAL 3110 produced by Kuraray Co. , Ltd. into 37.39 g, the amount of the ion exchange water into 395.61 g, and the amount of NHT-sol B2 produced by Topy Industries Ltd. into 2.25 g, 500 g of a liquid containing the EVOH and the swellable inorganic layered silicate was obtained. The ratio of the swellable inorganic layered silicate in the solid content blended in the liquid was 0.3%. Using the liquid, a film coated by a composition of the PVA and the swellable inorganic layered silicate was prepared in a similar manner to Example 1. Oxygen permeability of this film was measured in a similar manner to Example 1 and the result was 42 ml/m$^2$·day·atm.

[Comparative Example 12]

A mixed liquid of 450 g of NHT-sol B2 (solid content concentration of 5%) produced by Topy Industries Ltd., 2.625 g of ion exchange water, and 32.375 g of isopropyl alcohol was prepared, and 15 g of EXCEVAL 3110 produced by Kuraray Co. , Ltd. was added there and it was heated at 90°C while stirring for one hour to obtain 500 g of a liquid containing the EVOH and the swellable inorganic layered silicate. The ratio of the swellable inorganic layered silicate in the solid content blended in the liquid was 60%. Although, using the liquid, a film coated by a composition of the PVA and the swellable inorganic layered silicate was prepared in a similar manner to Example 1, cracks developed on a surface of the coating layer due to slight bending and the appearance was poor. Oxygen permeability of this film was measured in a similar manner to Example 1 and the result was 59 ml/m$^2$·day·atm.

[Example 8]

In a similar manner to Example 1 other than using EVAL VM-XL #15 (15 $\mu$m of a biaxially-stretched EVOH film subjected to aluminum deposition) produced by Kuraray Co., Ltd. as the substrate (D), a film coated by a composition of the EVOH and the swellable inorganic layered silicate was prepared and oxygen permeability of this film was evaluated. The number of corrugation was measured in a similar manner to Example 1 and the result was 0.6/mm$^2$. Apart of the sample film was cut out and vacuum dried at 40°C for 24 hours, and then the amount of oxygen permeation at 100°C-0% RH was measured by an oxygen permeation measuring device (GTR-30XFKE manufactured by GTR Tec Corporation) to calculate the oxygen permeability. As a result, the oxygen permeability of this film was a measurement limit (0.1 ml/m$^2$·day·atm) or less. At this time, the oxygen permeability of the coated film of Example 1 was measured in the same conditions and the result was 160 ml/m$^2$·day·atm.

[Comparative Example 13]

Oxygen permeability of EVAL VM-XL #15 produced by Kuraray Co. , Ltd. without coated by the composition of the EVOH and the swellable inorganic layered silicate was measured in a similar manner to Example 8. The result was 1.1 ml/m$^2$·day·atm.

[Example 9]

In a similar manner to Example 1 other than using EVAL EF-XL #15 (15 $\mu$m of a biaxially-stretched EVOH film) produced by Kuraray Co. , Ltd. subjected to silicon oxide deposition by PVD as the substrate (D), a film coated by a composition of the EVOH and the swellable inorganic layered silicate was prepared and oxygen permeability was evaluated in a similar manner to Example 8. As a result, the oxygen permeability of this film was a measurement limit (0.1 ml/m$^2$·day·atm) or less. The number of corrugation was measured in a similar manner to Example 1 and the result was 0.5/mm$^2$.

[Example 10]

In a similar manner to Example 1, 50 kg of a coating liquid having identical composition to that of Example 1 was prepared. Gravure rolls of 110 line were set in a gravure coater (two-roll system) of a film process testing apparatus manufactured by Modern Machinery Kabushiki Kaisha and the present coating liquid was coated on a film of EVAL VM-XL #15 produced by Kuraray Co. ,- Ltd. having a width of 600 mm at a moving speed of 140 m/min. A smoothing roll that was installed on a downstream side of approximately 30 cm from where the film left from the gravure rolls and had a smoothly processed surface having a diameter of 60 mm was pressed against a coated surface of the film to make the coated surface uniform, and then the film was introduced into a drying furnace to be dried and rewound. At this time, the smoothing roll was rotated in a reverse direction from the direction of flow of the film at 30 rpm. Accordingly, the linear speed Vs on the surface of the smoothing roll was -5.65 m/min. The tension at the smoothing roll unit was 3.3 Kg/cm, the drying temperature was at 140°C, and the length of the drying furnace was approximately 9m.

The coated film thus obtained had a composition layer of the EVOH and the swellable inorganic layered silicate having a thickness of 0.8 $\mu$m. Oxygen permeability of this film was evaluated in a similar manner to Example 8 and it was a measurement limit (0.1 ml/m$^2$·day·atm) or less. The number of corrugation was measured in a similar manner to Example 1 and the result was 0.3/mm$^2$.

[Comparative Example 14]

In a similar manner to Example 10 other than not using the smoothing roll, a film coated by a composition of the EVOH and the swellable inorganic layered silicate was prepared and the number of corrugation was evaluated in a similar manner to Example 1. As a result, the number of corrugation of the present coated film exceeded 30/mm$^2$ even for large corrugation and the smoothness was very poor.

[Example 11]

In a similar manner to Example 10 other than using a roll wound by a wire of size number 32 as the smoothing roll, a film coated by a composition of the EVOH and the swellable inorganic layered silicate was prepared and the number of corrugation was evaluated. As a result, the number of corrugation of the present coated film was 0.7/mm$^2$.

[Example 12]

In a similar manner to Example 10 other than using a smooth surface roll having a diameter of 10 mm as the smoothing roll and rotating it in a reverse direction from the direction of flow of the film at 30 rpm (Vs = -0.94 m/min), a film coated by a composition of the EVOH and the swellable inorganic layered silicate was prepared and the number of corrugation was evaluated. As a result, the number of corrugation of the present coated film was 0.5/mm$^2$.

[Comparative Example 15]

In a similar manner to Example 10 other than using a smooth surface roll having a diameter of 2 mm as the smoothing roll and not rotating it, a film coated by a composition of the EVOH and the swellable inorganic layered silicate was prepared. Since the smoothing roll deflected, it was not able to be firmly attached to the film uniformly. The number of corrugation of this coated film was evaluated and the result was at least 0.3/mm$^2$ at the portions touched to the smoothing roll while it exceeded 30/mm$^2$ at the portions not touched to the smoothing roll and the smoothness was poor.

[Example 13]

In a similar manner to Example 10 other than rotating the smoothing roll in a forward direction relative to the direction of flow of the film at 30 rpm, a film coated by a composition of the EVOH and the swellable inorganic layered silicate was prepared and the number of corrugation was evaluated. As a result, the number of corrugation of the present coated film was 0.6/mm$^2$.

[Example 14]

In a similar manner to Example 10 other than using a smooth surface roll having a diameter of 120 mm as the smoothing roll and rotating it in a reverse direction from the direction of flow of the film at 30 rpm (Vs = -11.3 m/min), a film coated by a composition of the EVOH and the swellable inorganic layered silicate was prepared and the number of corrugation was evaluated. As a result, the number of corrugation of the present coated film was 0.1/mm$^2$.

[Example 15]

In a similar manner to Example 10 other than making the moving speed at 30 m/min, a film coated by a composition of the EVOH and the swellable inorganic layered silicate was prepared and the number of corrugation was evaluated. As a result, the number of corrugation of the present coated film was 0.2/mm$^2$.

[Comparative Example 16]

In a similar manner to Example 15 other than rotating the smoothing roll in a forward direction to the direction of flow of the film at 90 rpm (Vs = 17.0 m/min), a film coated by a composition of the EVOH and the swellable inorganic layered silicate was prepared and the number of corrugation was evaluated. As a result, the number of corrugation of the present coated film was 2.8/mm$^2$.

[Comparative Example 17]

In a similar manner to Example 15 other than rotating the smoothing roll in a reverse direction from the direction of flow of the film at 180 rpm (Vs = -33.9 m/min), a film coated by a composition of the EVOH and the swellable inorganic layered silicate was prepared and the coating liquid on the smoothing roll was scattered and attached to a guide roll of the apparatus and the like, so that stable coating was not possible.

[Comparative Example 18]

In a similar manner to Example 10 other than using a roll wound by a wire of size number 100 as the smoothing roll, a film coated by a composition of the EVOH and the swellable inorganic layered silicate was prepared and the number of corrugation was evaluated. As a result, the number of corrugation of the present coated film was 4.0/mm$^2$.

[Comparative Example 19]

In a similar manner to Example 10 other than making the tension at the smoothing roll unit to be 20 Kg/cm, a film coated by a composition of the EVOH and the swellable inorganic layered silicate was prepared and the coating liquid was scraped too much by the smoothing roll and a large amount of the coating liquid became in a state of dripping off from the smoothing roll, and thus stable coating was not possible.

[Comparative Example 20]

In a similar manner to Example 10 other than making the tension at the smoothing roll unit to be 0.5 Kg/cm, a film coated by a composition of the EVOH and the swellable inorganic layered silicate was prepared, and due to wrinkles on the film, the smoothing roll was not able to be firmly attached to the film uniformly. The number of corrugation of this coated film was evaluated and the result was at least 0.4/mm$^2$ at the portions touched to the smoothing roll while it exceeded 30/mm$^2$ at the portions not touched to the smoothing roll and the smoothness was poor.

The results of evaluation above are briefly shown in the tables below.

[Table 1]

| | Polymer (A) | Swellable Inorganic Layered Silicate (B) | | | | Substrate (D) | | | Oxygen Permeability (ml/m²·day·atm, 20°C - 85% RH) | Number of Corrugation (number/mm²) |
|---|---|---|---|---|---|---|---|---|---|---|
| | | Type of Swellable Inorganic Layered Silicate (B) | Ratio of (B) Blended in Solid Content (wt%) | Logarithmic Average Particle Diameter of (B) (μm) | Standard Deviation of (B) (μm) | Substrate | Thickness (μm) | Deposition | | |
| Example 1 | EVOH | NHT-sol B2 | 10 | 3.8 | 2.2 | EVOH | 15 | None | 0.9 | 0.6 |
| Example 2 | EVOH | NHT-sol B2 | 10 | 3.8 | 2.2 | PET | 12 | None | 2.1 | 0.5 |
| Example 3 | PVOH | NHT-sol B2 | 10 | 3.8 | 2.2 | PET | 12 | None | 4.1 | 0.6 |
| Example 4 | PVOH | NHT-sol B5 | 10 | 5.2 | 2.3 | PET | 12 | None | 3.1 | 0.7 |
| Example 5 | PVOH | NHT-sol B7 | 10 | 7.1 | 2.4 | PET | 12 | None | 4.2 | 0.8 |
| Example 6 | PVOH | NTS-sol C | 10 | 2.8 | 2.1 | PET | 12 | None | 9.7 | 0.5 |
| Example 7 | PVOH | NHT-sol B10 | 10 | 10.4 | 2.4 | PET | 12 | None | 15 | 0.9 |
| Comparative Example 1 | None | None | - | - | - | EVOH | 15 | None | 1.8 | - |
| Comparative Example 2 | None | None | - | - | - | PET | 12 | None | 92 | - |
| Comparative Example 3 | PVOH | None | - | - | - | PET | 12 | None | 53 | - |
| Comparative Example 4 | PVOH | NTS-5 | 10 | 11.5 | 2.4 | PET | 12 | None | 21 | 1.0 |
| Comparative Example 5 | PVOH | NTS-10 | 10 | 14.0 | 2.5 | PET | 12 | None | 29 | 1.3 |
| Comparative Example 6 | PVOH | NHT-sol 1 | 10 | 1.1 | 2.1 | PET | 12 | None | 33 | 0.4 |
| Comparative Example 7 | PVOH | NHT-sol 2 | 10 | 2.2 | 1.6 | PET | 12 | None | 30 | 0.5 |
| Comparative Example 8 | PVOH | NHT-sol B1 | 10 | 1.1 | 1.6 | PET | 12 | None | 38 | 0.3 |

(continued)

| | Polymer (A) | Swellable Inorganic Layered Silicate (B) | | | | Substrate (D) | | | Oxygen Permeability | Number of Corrugation |
| | | Type of Swellable Inorganic Layered Silicate (B) | Ratio of (B) Blended in Solid Content (wt%) | Logarithmic Average Particle Diameter of (B) ($\mu$m) | Standard Deviation of (B) ($\mu$m) | Substrate | Thickness ($\mu$m) | Deposition | (ml/m$^2$·day·atm, 20°C - 85% RH) | number/mm$^2$ |
|---|---|---|---|---|---|---|---|---|---|---|
| Comparative Example 9 | PVOH | Kunipia F | 10 | 1.9 | 1.6 | PET | 12 | None | 33 | 0.5 |
| Comparative Example 10 | PVOH | ME-100 | 10 | 5.9 | 1.6 | PET | 12 | None | 28 | 0.8 |
| Comparative Example 11 | PVOH | NHT-sol B2 | 0.3 | 3.8 | 2.2 | PET | 12 | None | 42 | 0.1 |
| Comparative Example 12 | PVOH | NHT-sol B2 | 60 | 3.8 | 2.2 | PET | 12 | None | 59 | > 30 |

[Table 2]

| | Polymer (A) | Swellable Inorganic Layered Silicate (B) | | | | Substrate (D) | | | Oxygen Permeability | Number of Corrugation |
| | | Type of Swellable Inorganic Layered Silicate (B) | Ratio of (B) Blended in Solid Content (wt%) | Logarithmic Average Particle Diameter of (8) ($\mu$m) | Standard Deviation of (B) ($\mu$m) | Substrate | Thickness ($\mu$m) | Deposition | (ml/m$^2$•day•atm, 100°C - 0% RH) | number/mm$^2$ |
|---|---|---|---|---|---|---|---|---|---|---|
| Example 1 | EVOH | NHT-sol B2 | 10 | 3.8 | 2.2 | EVOH | 15 | None | 160 | 0.6 |
| Example 8 | EVOH | NHT-sol B2 | 10 | 3.8 | 2.2 | EVOH | 15 | Al | < 0.1 | 0.6 |
| Example 9 | EVOH | NHT-sol 82 | 10 | 3.8 | 2.2 | EVOH | 15 | SiOx | < 0.1 | 0.5 |
| Comparative Example 13 | None | None | - | - | - | EVOH | 15 | Al | 1.1 | - |

[Table 3]

| | Moving Speed | Smoothing Conditions | | | | | | Number of Corrugation (number/mm$^2$) | Other Problem |
|---|---|---|---|---|---|---|---|---|---|
| | Vf (m/min) | Smoothing | Vs (m/min) | Vs/Vf | Smoothing Roll Diameter (mm) | Smoothing Roll Specification | Tension (Kg/cm) | | |
| Example 10 | 140 | Done | -5.65 | -0.040 | 60 | Smooth Surface | 3.3 | 0.3 | No Problem |
| Example 11 | 140 | Done | -5.65 | -0.040 | 60 | Number 32 | 3.3 | 0.7 | No Problem |
| Example 12 | 140 | Done | -0.94 | -0.007 | 10 | Smooth Surface | 3.3 | 0.5 | No Problem |
| Example 13 | 140 | Done | 5.65 | 0.040 | 60 | Smooth Surface | 3.3 | 0.6 | Not problem |
| Example 14 | 140 | Done | -11.3 | -0.081 | 120 | Smooth Surface | 3.3 | 0.1 | No Problem |
| Example 15 | 30 | Done | -5.65 | -0.188 | 60 | Smooth Surface | 3.3 | 0.2 | No Problem |
| Comparative Example 14 | 140 | Not Done | - | - | - | - | 3.3 | > 30 | Pearskin-like Appearance |
| Comparative Example 15 | 140 | Done | 0 | 0 | 2 | Smooth Surface | 3.3 | 0.1 - > 30 | Smoothing Roll Not Touching Uniformly |
| Comparative Example 16 | 30 | Done | 17 | 0.567 | 100 | Smooth Surface | 3.3 | 2.8 | No Problem |
| Comparative Example 17 | 30 | Done | -33.9 | -1.130 | 100 | Smooth Surface | 3.3 | - | Stable Operation Not Possible due to Liquid Spattering |
| Comparative Example 18 | 140 | Done | -5.65 | -0.040 | 10 | Number 100 | 3.3 | 4.0 | No Problem |
| Comparative Example 19 | 140 | Done | -5.65 | -0.040 | 10 | Smooth Surface | 20 | - | Stable Operation Not Possible due to Liquid Dripping |
| Comparative Example 20 | 140 | Done | -5.65 | -0.040 | 10 | Smooth Surface | 0.5 | 0.1 - > 30 | Smoothing Roll Not Touching Uniformly |

It is understood that the barrier films of Examples 1 through 2 of the present invention has the remarkably improved barrier property compared to those of Comparative Examples 1 through 2, in which the resin composition (C) was not coated that contains the water soluble or water dispersible polymer (A) and the swellable inorganic layered silicate (B), or that of Comparative Example 3, in which the swellable inorganic layered silicate (B) was not contained and only the water soluble or water dispersible polymer (A) was coated.

In addition, in the cases of Comparative Examples 4 through 10 in which the swellable inorganic layered silicate (B) did not satisfy the expressions (1) and (2), the barrier property was improved compared to that of Comparative Example 3, in which the swellable inorganic layered silicate (B) was not contained and only the water soluble or water dispersible polymer (A) was coated, whereas the oxygen permeability of Examples 3 through 7, in which the swellable inorganic layered silicate (B) satisfied the expressions (1) and (2), was 20 ml/m$^2$·day·atm or less, which is an indication for a high barrier film, while those of Comparative Examples 4 through 10 exceeded 20 ml/m$^2$·day·atm and the degrees of improvement were severely inferior.

Further, in Comparative Example 11 in which the swellable inorganic layered silicate (B) was blended in a ratio of less than 0.5%, the improvement in the barrier property was very slight compared to Comparative Example 3, in which the swellable inorganic layered silicate (B) was not contained and only the water soluble or water dispersible polymer (A) was coated. Meanwhile, Comparative Example 13, in which the swellable inorganic layered silicate (B) was blended in a ratio exceeding 55% had the coating layer prone to develop cracks and had the barrier property, on the contrary, deteriorated even when compared to Comparative Example 3, in which the swellable inorganic layered silicate (B) was not contained and only the water soluble or water dispersible polymer (A) was coated.

Whereas, Comparative Example 13, in which the biaxially-stretched EVOH film having a good barrier property was subjected to aluminum deposition, exhibited a relatively good barrier property even at a high temperature while Examples 8 through 9, in which the above was coated by the resin composition (C) containing the water soluble or water dispersible polymer (A) and the swellable inorganic layered silicate (B) , exhibited the very good barrier properties of the measurement limit or less even at a high temperature and it is understood that they are preferred embodiments of the present invention.

Regarding the production techniques, Examples 10 through 15 yielded good films with less irregularities on the surface, while Comparative Example 14 not using the smoothing roll had a very large number of irregularities and Comparative Example 15 using the exceedingly thin smoothing roll and Comparative Example 20 having the exceedingly low tension at the smoothing roll unit had a problem of not touching the smoothing roll uniformly. In the cases of Comparative Example 16 having the exceedingly large Vf/Vs of the expression (3) and Comparative Example 18 using the exceedingly thick wire winding the smoothing roll, the coating itself was not a problem but the irregularities were left on the surface and the smoothness was insufficient. In Comparative Example 17 having the exceedingly small Vf/Vs of the expression (3) and Comparative Example 19 having the exceedingly high tension at the smoothing roll unit, stable operation was not possible due to the problems of scattering and dripping of the liquid.

The gas barrier film including a resin composition layer with a swellable inorganic layered silicate dispersed therein of the present invention has an extremely good gas barrier property and is applicable to gas barrier packaging materials and the like. In addition, the method of producing a gas barrier film of the present invention enables to produce a gas barrier film having the resin composition layer with extremely less irregularities on a surface thereof.

**Claims**

1. A gas barrier film comprising a layer of a resin composition (C) on at least one side of a substrate (D), wherein the resin composition (C) contains a water soluble or water dispersible polymer (A) and a swellable inorganic layered silicate (B) satisfying expressions (1) and (2) below,

$$11.0 \geq D \geq 2.0 \ \mu m \quad (1)$$

$$\sigma \geq 1.8 \ \mu m \quad (2)$$

wherein the resin composition (C) layer and/or the substrate (D) has at least one side having a deposited layer (E) of metal and/or metal oxide thereon, wherein D and $\sigma$ are a logarithmic average particle diameter of the swellable inorganic layered silicate (B) measured by laser diffraction and standard deviation of a particle size distribution thereof, respectively.

2. The gas barrier film according to claim 1, wherein the swellable inorganic layered silicate (B) is blended in a ratio of from 0.5 to 55 weight% in the resin composition (C).

3. The gas barrier film according to claim 1 or 2, wherein the water soluble or water dispersible polymer (A) is a polyvinyl alcohol-based polymer.

4. The gas barrier film according to claim 3, wherein the polyvinyl alcohol-based polymer is an ethylene-vinyl alcohol-based polymer.

5. The gas barrier film according to any one of claims 1 to 4, wherein the swellable inorganic layered silicate (B) is a synthetic inorganic layered silicate.

6. The gas barrier film according to claim 5, wherein the swellable inorganic layered silicate (B) is a synthetic smectite.

7. The gas barrier film according to any one of claims 1 to 6, wherein a layer configuration of the gas barrier film is the resin composition (C) layer / the deposited layer (E) / the substrate (D).

8. The gas barrier film according to any one of claims 1 to 7, wherein the substrate (D) is a film of at least one type of polymer selected from a group consisting of a polyamide-based polymer, a polyester-based polymer, and a polyvinyl alcohol-based polymer.

9. The gas barrier film according to claim 8, wherein the substrate (D) is a film of an ethylene-vinyl alcohol-based polymer.

10. The gas barrier film according to any one of claims 1 to 9, wherein a number of corrugation within a range of diameters of from 25 to 100 $\mu$m on a surface of the layer of the resin composition (C) is less than one per 1 mm$^2$.

11. A method of producing the gas barrier film according to claim 10, comprising:

coating a solution or an aqueous dispersion containing the swellable inorganic layered silicate (B) and the water soluble or water dispersible polymer (A) on the substrate (D) using coating equipment;
smoothing it by a smoothing roll; and
drying it.

12. The method of producing the gas barrier film according to claim 11, wherein the smoothing roll has a diameter of 3 mm or more.

13. The method of producing the gas barrier film according to claim 11 or 12, wherein the smoothing roll is a smoothing roll wound by a wire of size number 75 or less or a smooth surface roll not wound by a wire.

14. The method of producing the gas barrier film according to any one of claims 11 to 13, wherein the smoothing roll unit has a film tension of from 1.0 to 15 Kg/cm.

15. The method of producing the gas barrier film according to any one of claims 11 to 14, wherein the smoothing roll has a linear speed on a surface thereof and the film has a moving speed, both falling within a range of an expression (3) below,

$$0.5 \geq Vs/Vf \geq -1 \qquad (3)$$

wherein Vs is the linear speed on a surface of the smoothing roll and Vf is the moving speed of the film.

16. A packaging material, comprising at least one or more layers of the gas barrier film according to any one of claims 1 to 10.

**Patentansprüche**

1. Gassperrfolie, umfassend eine Schicht einer Harzzusammensetzung (C) auf mindestens einer Seite eines Substrats (D),

   wobei die Harzzusammensetzung (C) ein wasserlösliches oder wasserdispergierbares Polymer (A) und ein quellfähiges anorganisches Schichtsilikat (B) enthält, das den nachstehenden Ausdrücken (1) und (2) genügt,

$$11{,}0 \geq D \geq 2{,}0 \ \mu m \quad (1)$$

$$\sigma \geq 1{,}8 \ \mu m \quad (2)$$

   wobei die Schicht der Harzzusammensetzung (C) und/oder das Substrat (D) mindestens eine Seite mit einer darauf aufgebrachten Schicht (E) aus Metall und/oder Metalloxid aufweisen,

   wobei D und $\sigma$ ein mittels Laserbeugung gemessener logarithmischer gemittelter Teilchendurchmesser des quellfähigen anorganischen Schichtsilikats (B) beziehungsweise eine Standardabweichung einer Teilchengrößenverteilung hiervon sind.

2. Gassperrfolie nach Anspruch 1, wobei das quellfähige anorganische Schichtsilikat (B) in einem Anteil von 0,5 bis 55 Gew.-% in der Harzzusammensetzung (C) beigemischt ist.

3. Gassperrfolie nach Anspruch 1 oder 2, wobei das wasserlösliche oder wasserdispergierbare Polymer (A) ein Polymer auf Polyvinylalkohol-Basis ist.

4. Gassperrfolie nach Anspruch 3, wobei das Polymer auf Polyvinylalkohol-Basis ein Polymer auf Ethylen-Vinylalkohol-Basis ist.

5. Gassperrfolie nach einem der Ansprüche 1 bis 4, wobei das quellfähige anorganische Schichtsilikat (B) ein synthetisches anorganisches Schichtsilikat ist.

6. Gassperrfolie nach Anspruch 5, wobei das quellfähige anorganische Schichtsilikat (B) ein synthetisches Smektit ist.

7. Gassperrfolie nach einem der Ansprüche 1 bis 6, wobei eine Schichtkonfiguration der Gassperrfolie wie folgt ist: die Schicht der Harzzusammensetzung (C) / die aufgebrachte Schicht (E) / das Substrat (D).

8. Gassperrfolie nach einem der Ansprüche 1 bis 7, wobei das Substrat (D) eine Folie aus mindestens einem Polymertyp ist, welcher aus einer Gruppe, bestehend aus einem Polymer auf Polyamid-Basis, einem Polymer auf Polyester-Basis und einem Polymer auf Polyvinylalkohol-Basis, ausgewählt ist.

9. Gassperrfolie nach Anspruch 8, wobei das Substrat (D) eine Folie aus einem Polymer auf Ethylen-Vinylalkohol-Basis ist.

10. Gassperrfolie nach einem der Ansprüche 1 bis 9, wobei eine Riefenanzahl innerhalb eines Durchmesserbereichs von 25 bis 100 $\mu$m auf einer Oberfläche der Schicht der Harzzusammensetzung (C) weniger als eins pro 1 mm$^2$ ist.

11. Verfahren des Herstellens der Gassperrfolie nach Anspruch 10, umfassend:

    Auftragen einer das quellfähige anorganische Schichtsilikat (B) und das wasserlösliche oder wasserdispergierbare Polymer (A) enthaltenden Lösung oder wässrigen Dispersion auf das Substrat (D) unter Benutzung einer Auftragungsvorrichtung;
    Glätten derjenigen durch eine Glättwalze; und
    Trocknen derjenigen.

12. Verfahren des Herstellens der Gassperrfolie nach Anspruch 11, wobei die Glättwalze einen Durchmesser von 3 mm oder mehr aufweist.

**13.** Verfahren des Herstellens der Gassperrfolie nach Anspruch 11 oder 12, wobei die Glättwalze eine durch einen Draht der Größenzahl 75 oder weniger gespulte Glättwalze oder eine nicht durch einen Draht gespulte Walze mit glatter Oberfläche ist.

**14.** Verfahren des Herstellens der Gassperrfolie nach einem der Ansprüche 11 bis 13, wobei die Glättwalzeneinheit eine Folienspannung von 1,0 bis 15 kg/cm aufweist.

**15.** Verfahren des Herstellens der Gassperrfolie nach einem der Ansprüche 11 bis 14, wobei die Glättwalze eine lineare Geschwindigkeit auf einer Oberfläche hiervon aufweist und die Folie eine Bewegungsgeschwindigkeit aufweist, wobei beide innerhalb eines Bereichs eines nachstehenden Ausdrucks (3) liegen,

$$0,5 \geq Vs/Vf \geq -1 \qquad (3)$$

wobei Vs die lineare Geschwindigkeit auf einer Oberfläche der Glättwalze ist und Vf die Bewegungsgeschwindigkeit der Folie ist.

**16.** Verpackungsmaterial, umfassend mindestens eine oder mehrere Schichten der Gassperrfolie nach einem der Ansprüche 1 bis 10.

**Revendications**

**1.** Film barrière aux gaz comprenant une couche d'une composition de résine (C) sur au moins une face du substrat (D), où la composition de résine (C) contient un polymère soluble ou dispersible dans l'eau (A) et un silicate en couches inorganique gonflable (B) satisfaisant les expressions (1) et (2) ci-dessous,

$$11,0 \geq D \geq 2,0 \ \mu m \qquad (1)$$

$$\sigma \geq 1,8 \ \mu m \qquad (2)$$

où la couche de composition de résine (C) et/ou le substrat (D) présente sur au moins une face, une couche déposée (E) de métal et/ou d'oxyde métallique,
où D et $\sigma$ sont le diamètre moyen logarithmique des particules du silicate en couches inorganique gonflable (B), mesuré par diffraction laser, et l'écart type de la distribution de la taille des particules de celui-ci, respectivement.

**2.** Film barrière aux gaz selon la revendication 1, où le silicate en couches inorganique gonflable (B) est mélangé en un rapport allant de 0,5 à 55% en poids dans la composition de résine (C).

**3.** Film barrière aux gaz selon la revendication 1 ou 2, où le polymère soluble ou dispersible dans l'eau (A) est un polymère à base de poly(alcool vinylique).

**4.** Film barrière aux gaz selon la revendication 3, où le polymère à base de poly(alcool vinylique) est un polymère à base d'éthylène-alcool vinylique.

**5.** Film barrière aux gaz selon l'une quelconque des revendications 1 à 4, où le silicate en couches inorganique gonflable (B) est un silicate en couches inorganique synthétique.

**6.** Film barrière aux gaz selon la revendication 5, où le silicate en couches inorganique gonflable (B) est une smectite synthétique.

**7.** Film barrière aux gaz selon l'une quelconque des revendications 1 à 6, où une configuration en couches du film barrière aux gaz est la couche de composition de résine (C)/ la couche déposée (E)/ le substrat (D).

**8.** Film barrière aux gaz selon l'une quelconque des revendications 1 à 7, où le substrat (D) est un film d'au moins un type de polymère choisi parmi le groupe consistant en un polymère à base de polyamide, un polymère à base de polyester, et un polymère à base de poly(alcool vinylique).

9. Film barrière aux gaz selon la revendication 8, où le substrat (D) est un film de polymère à base d'éthylène-alcool vinylique.

10. Film barrière aux gaz selon l'une quelconque des revendications 1 à 9, où le nombre d'ondulation au sein d'une plage de diamètres allant de 25 à 100 μm sur la surface d'une couche de la composition de résine (C) est inférieur à un par 1 mm².

11. Procédé de production du film barrière aux gaz selon la revendication 10, comprenant :

le revêtement d'une solution ou dispersion aqueuse contenant le silicate en couches inorganique gonflable (B) et le polymère soluble ou dispersible dans l'eau (A) sur le substrat (D) en utilisant un équipement de revêtement ; le lissage de celui-ci par un rouleau de lissage, et le séchage de celui-ci.

12. Procédé de production du film barrière au gaz selon la revendication 11, où le rouleau de lissage a un diamètre de 3 mm ou plus.

13. Procédé de production du film barrière au gaz selon la revendication 11 ou 12, où le rouleau de lissage est un rouleau de lissage avec fil métallique ayant une taille de nombre de 75 ou moins ou un rouleau à surface lisse sans fil métallique.

14. Procédé de production du film barrière au gaz selon l'une quelconque des revendications 11 à 13, où l'unité de rouleau de lissage a une tension de film allant de 1,0 à 15 kg/cm.

15. Procédé de production du film barrière au gaz selon l'une quelconque des revendications 11 à 14, où le rouleau de lissage a une vitesse linéaire sur sa surface et le film a une vitesse de déplacement, toutes deux se situant dans une plage satisfaisant l'expression (3) ci-dessous,

$$0,5 \geq Vs/Vf \geq -1 \qquad (3)$$

où Vs est la vitesse linéaire sur la surface du rouleau de lissage et Vf est la vitesse de déplacement du film.

16. Matériau d'emballage, comprenant au moins une ou plusieurs couches du film barrière aux gaz selon l'une quelconque des revendications 1 à 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7251475 A
- JP 2003268183 A
- JP 10323928 A
- JP 3093542 A
- JP 11333364 A

**Non-patent literature cited in the description**

- **KIYOSHI CHUJO.** World of Nanocomposite. Kogyo Chosakai Publishing, Inc, 2000, 46-50